# EUROPEAN PATENT APPLICATION

(11) **EP 1 465 130 A1**
(43) Date of publication of application: **06.10.2004**
(21) Application number: 03007409.0
(22) Date of filing: 02.04.2003
(51) Int. Cl.: G08B 13/196, G08B 15/00, H04B 3/54, H04N 7/18

(54) **Transmitter, receiver, method and surveillance system**

(71) Applicant: VBISS GmbH, 74912 Kirchart (DE)
(72) Inventor: Bastian, Juergen c/o VBISS GmbH, 74912 Kirchart (DE)
(74) Representative: Hellmich, Wolfgang, Dr.

(57) **Abstract**

This invention pertains to a transmitter, receiver and method for transmitting images in particular video signals over power cables. Moreover this invention pertains to a surveillance system which comprises a power cable for providing electrical power to consumer loads and an image source. The system further comprises a transmitter connected to the power cable and the image source. The transmitter encodes image information and transmits the encoded image information over the power cable. A receiver connected to the power cable decodes the encoded image information to recover the image information provided on the power cable. Finally a display connected to the receiver displays the image information.

## Description

The present invention pertains to a transmitter, receiver, method and surveillance system. In particular the invention relates to the transmission of images via power cables.

Generally known are baby phone monitors A baby phone monitor consists of a transmitter which is placed closed to the baby and the receiver positioned close to the parents. The transmitter comprises a microphone and transmits the microphone signals to the receiver, provided that the microphone signal is higher than a predetermined level. The receiver is provided with a loudspeaker for reproducing the microphone signal. Both transmitter and receiver may be connected to the power supply network, for both supplying both the transmitter and receiver with electrical power and transmitting the microphone signal.

Generally known is also the power cable communication technology. Its purpose is the data transmission over power cables. Not only the telecoms have cables to nearly every home or flat which may be used for data transmission but also the utilities have power cables to nearly every flat. In order to use the existing infrastructure for data transmission, modems for data transmission over power cables have been developed. At present data rates of 14 Mbit/s are available. This is good enough for audio and video streaming when power cable home networks comes into reach.

Military installations have lights located every 50 meters on the perimeter of the installations. The lights are supplied by two power supply cables, a primary and a secondary one. Usually the primary supply cable supplies commercial electrical power to the lamps. In case of failure generators or batteries supply the lamps with electrical power via the secondary power cables

Also in public buildings like underground stations a first group of lamps are supplied by commercial electricity. A second group of lamps are supplied by emergency backup generator in case that the commercial power is not available.

In addition, to or instead of a emergency backup generator backup batteries may be provided.

It is the object of this invention to provide a transmitter, receiver, method and surveillance system which more intensively use power cables.

This object is achieved by the subject matter of the independent claims.

Preferred embodiments of the invention are the subject matter of the dependent claims.

An image processor can process digitized images in various forms. On one hand it can perform known image compression algorithm like JPEG (joint photographic experts group) or MPEG (moving pictures experts group). On the other hand an image processor can compare successive images in order to identify motion in the field of vision. Images may only be transmitted if motion is detected. In this case an alarm may alert the watch man.

Using a carrier frequency on which an image signal is modulated separates the cable frequency from the frequency band used for image transmission. The broader the frequency gap between the power frequency and the frequency band for image transmission is, the simpler filters can be used to separate the cable frequency from the image frequency band.

The receiver may perform some image evaluation and route only relevant images e.g. of a sequence showing motion to an output. Thus, it may advantageously support the watch man by providing only a small number of relevant images.

In order to more intensively use power cables a plurality of images sources may be connected to a power cable.

Preferably a single receiver decodes the image data and routes the image data to a plurality of outputs wherein one output may correspond to one image source To each image source a unique ID number may be assigned which helps the receiver to route an image information portion to its respective output.

Using an idle backup power cable for the image transmission its advantageous because an idle power cable carries less noise which may be generated by switching on or off high-power consumer loads.

Repeaters may be used to extend the distance over which image information may be transported via power cables.

In the following preferred embodiments of this invention are described referring to the accompanying drawings.
Figure 1 shows a surveillance system.
Figure 2 shows a respective circuit diagram.
Figure 3 shows a circuit overview of a camera module.
Figure 4 shows a more detailed circuit diagram of an AM transmitter and receiver
Figure 5 shows a circuit diagram on FM transmitter and receiver
Figure 6 shows a digital transmitter and receiver comprising an image processor
Figure 7 shows a circuit diagram of a repeater.

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspect of the present invention, the scope of which is defined by the appended claims.

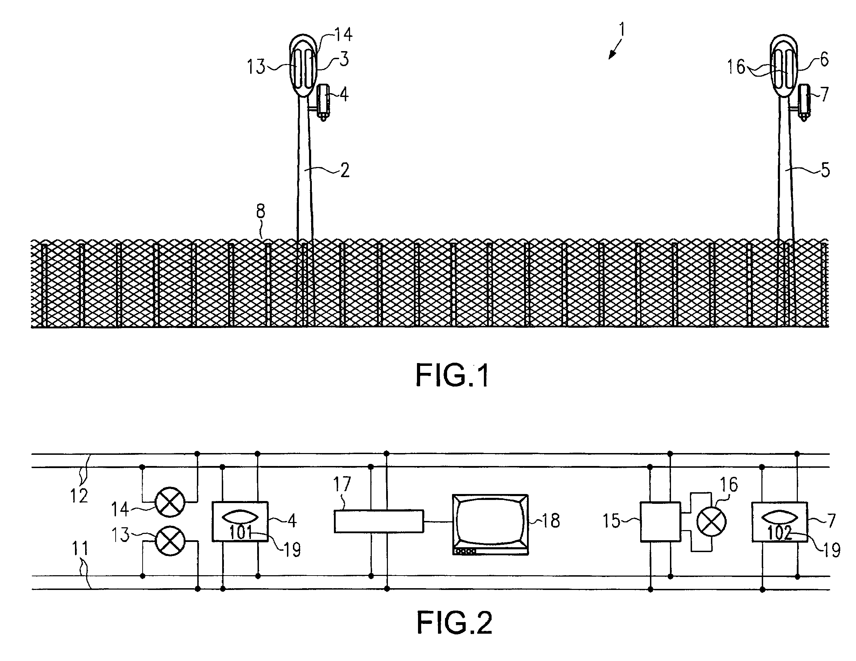

Figure 1 shows a perimeter security installation 1. A fence 8 protects the border of a facility like a military installation. Light poles 2 and 5 may be located every 50 meters in order to light a stripe along fence 8. Light poles 2 and 5 carrier lamps 3 and 6. Video cameras 4 and 7 monitor the lighted stripe along fence 8. Instead of video cameras other image sources may be installed that provide electronic images. Each image source may have an ID number 19. The image signal of cameras having a higher resolution than video cameras e.g. 2 to 5 MPixel can not be transmitted using a video signal without loosing resolution.

Figure 2 shows a circuit diagram of the perimeter security installation 1.

A primary power cable 11 provides commercial electrical power to lamps 3 and 6 in normal operations. In case of failure e.g. commercial power is not available, lamps 3 and 6 are supplied by the secondary power cable 12 with electrical power from an emergency backup generator or a backup battery. In one embodiment two lights sources 13 and 14 may be comprised In lamp 3. The first light source 13 is connected to primary power cable 11 whereas the second light source 14 is connected to secondary power cable 12. In this embodiment the secondary power cable may only be supplied with electricity if no commercial power is available and the primary power cable is consequently not provided with electrical power. Fluorescent lamps may be used for light sources 13 and 14.

In another embodiment only one light source 16 may be provided within lamp 6 It is connected to both, the primary and secondary power supply cables 11 and 12 via a switch 15. If there is electrical power on primary cable 11 available, switch 15 connects light source 16 to primary power cable 11. Otherwise, switch 15 connects light source 16 to secondary power cable 12. Switch 15 may be comprise of a relay which is powered by primary power cable 11. The relay within switch 15 connects light source 16 to primary power cable 11 if its coil is powered. Otherwise the relay connects light source 16 to secondary power cable 12. Actually light source 16 may comprise two or more fluorescent lamps which may be connect in parallel to switch 15.

Cameras 4 and 7 may be connected to both, primary and secondary power cables 11 and 12. If commercial power is available on primary power cable 11, cameras 4 and 7 are supplied with electricity via primary power cable 11. The image or video signals from cameras 4 and 7 are preferably transmitted over secondary power cable 12 because it is not supplied with electricity and has therefore a lower noise level. Persons skilled in the art are aware that any consumer load may generate noise on the power cable in particular when the load is switched on or off.

If no commercial electricity is available the primary power cable 11 is idle. In this case cameras 4 and 7 may be supplied with electricity via secondary power cable 12 and transmit image information via the less noisy primary power cable 11.

Cameras 4 and 7 can be supplied and output their image information on same power cable. This is important if a power cable is interrupted between receiver and the respective camera.

In lighting systems for public buildings like undergrounds two light sources are provided. A primary lighting system consists of a large number of fluorescent tubs and is supplied by commercial electrical power. A secondary emergency lighting system comprising only a small number of bulbs as a DC system connected to a backup battery. As long as commercial power is available the batteries are charged with the available electricity and the secondary lighting system may be turned on or off. If commercial power is switched off, the batteries supply the emergency lighting system with electricity. In such a system the image information is preferably transmitted over the secondary DC power cables because these cables have a lower noise level. This is a result of the battery buffering the system against the commercial power cables and the small number and low-power consumer loads consisting of electric light bulbs.

Moreover if may cameras are provided, the available bandwidth on one power cable preferably the idle one may not suffice to transmit the image signals of all cameras. Therefore a sub group of the cameras may transmit its image information on the secondary power cable were as the rest of the cameras transmits its image information via the primary power cable.

The cameras 4 and 7 may also receive commands via one of the power cables. These commands may instruct a camera via which power cable it has to sent its image information. It may further comprise direction information to tilt and turn the camera and zoom information to control the range of vision.

Receiver 17 may pick image or video signals from either primary or secondary power cables 11 and 12 or from both power cables. Receiver 17 outputs a video signal to monitor 18. The video signal may be a TV signal or a signal for driving a computer monitor. Receiver 17 may provide the signal for each camera to a different monitor or may display the image signals of a group of cameras on one monitor and the image signal of the other cameras on the other monitors. In an embodiment a higher resolution computer monitor is divided horizontally and vertically into four areas in each of which the images of four different cameras are displayed.

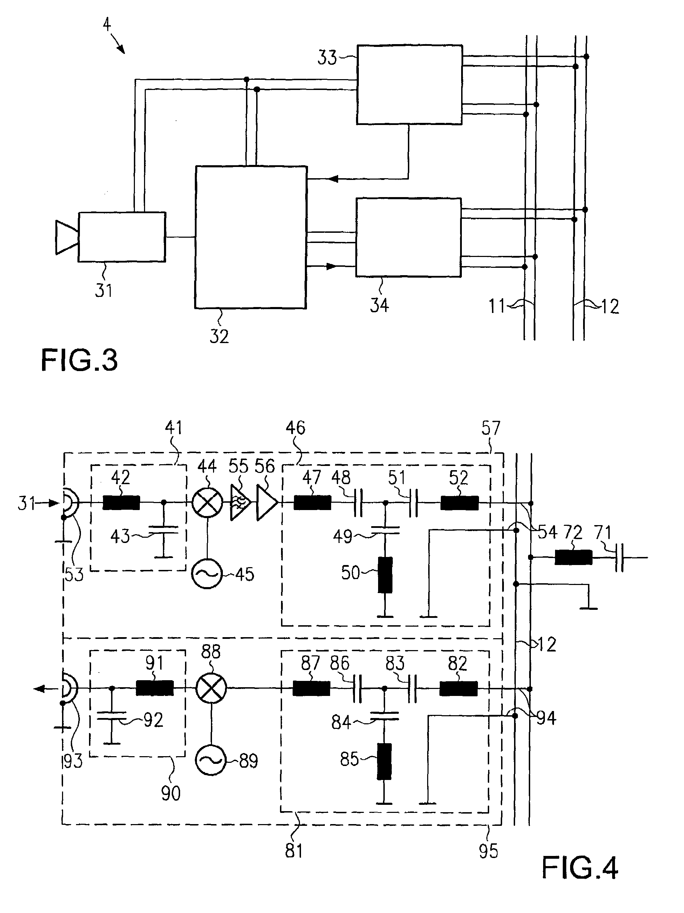

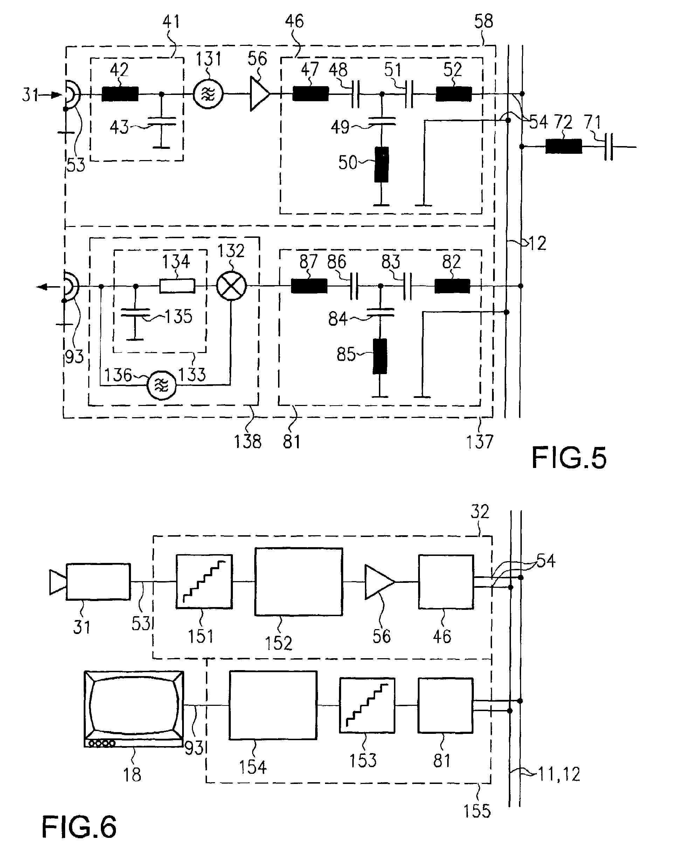

Figure 3 shows camera module 4 in more detail. It comprises a camera 31, a modulator or processor 32, a power switch 33 and a signal switch 34. Power switch 33 provides electrical power to camera 31 and modulator or processor 32 and operates on a similar manner as switch 15 in figure 2. Camera 31 provides and image or video signal to modulator or processor 32. Such a modulator is described in more detail in connection with figures 4 and 5. Such a processor is explained in more detail in connection with figure 6. Modulator or processor 32 constitutes the interface between the image or video signal on one hand and the connection to the power cable on the other hand. Signal switch 34 connects modulator or processor 32 either to primary or secondary power cable 11 or 12. Signal switch 34 may be controlled by modulator or processor 32 which in turn receives information from power switch 33 which of the power cables carnes electricity and which one is idle.

Figure 4 shows a more detailed circuit diagram of modulator 57 and a respective demodulator 95 which may be present in receiver 17. Camera module 4 provides an image or video signal to input 53. A low pass filter 41 limits the bandwidth of the input signal. Low pass filters are know in the state of the art and may comprise a coil 42 and capacitor 43. An oscillator 45 generates a carrier frequency which is multiplied in mixer 44 with the output signal of the low pass filter 41. The output signal of mixer 44 may pass through a band pass filter 55 and is amplified by amplifier 56. The output of amplifier 56 is connected to a power cable 12 via a filter 46. Filter 46 blocks the power frequency and transmits frequency band around the carrier frequency comprising the image information. Filter 46 may comprise two band pass filters consisting of coils 47 and 52 and capacitors 48 and 51 for transmitting the image information and band pass filter 49 and 50 for short circuiting the power frequency. Filter 46 may be designed to equalize the frequency response of power cable 12. In particular it may emphasize the higher frequencies of the frequency band with respect to the lower frequencies of this frequency band. To this end the resonance frequencies of coil 47, capacitor 48 and coil 52 and capacitor 51 may be chosen to be slightly higher than the carrier frequency.

Coil 72 and capacitor 71 exemplify a second modulator connect to power cable 12. Moreover the input 94 of a demodulator 95 within receiver 17 is connected to power cable 12. The receiver comprises a filter 81, a mixer 88, an oscillator 89 and a low pass filter 90. The filter 81 is similar to the filter 46 of modulator 57 Mixer 88 mixes the signals provided by filter 81 with the carrier frequency of oscillator 89. Low pass filter 90 removes high frequency components of the output signal of mixer 88 and provides a demodulated signal at output 93. The carrier frequency of the demodulator 95 is identical to the carrier frequency of the respective modulator. Receiver 17 may comprise a demodulator 75 for each camera module it is connected to.

In another embodiment illustrated in figure 5, the modulator 58 may comprise a voltage controlled oscillator (VCO) 131 which changes its frequency according to an input signal. The input signal may be a low pass filtered video or image signal output from camera 31. Low pass filter 41 and filter 46 have been described in connection with figure 4. In this case demodulator 137 comprises a phase locked loop (PLL) circuit 138 for demodulating the image information from power cable 12. PLL circuit 138 comprises a phase detector 132, a VCO 136 and a loop filter 133 which may comprise a resistor 134 and a capacitor 135.

Figure 6 shows an embodiment of processor 32 and a respective receiver circuit 155. This embodiment of processor 32 comprises an analog-digital converter (ADC) 151, an image processor 152 an amplifier 56 and filter 46. The image processor receives from ADC 151 digitized image data. The image processor can compress the digital image data e.g. by a JPEG (joint photographic experts group) algorithm or an MPEG (moving pictures experts group) algorithm. The image processor 152 may also average a predetermined number of images in order to remove noise from the images and transmit only averaged image data to amplifier 56. Moreover the image processor 152 may compare successive images in order to detect motion in the images. It may only transmit image information if motion is detected. The latter point may be considered as a surveillance system specific data compression which helps to focus the attention of watch man to possible intruder. To each camera 31 and ID number may be associated which is appended to every image information packet that is transmitted from the respective image processor 152.

Figure 6 also shows an overview of the corresponding receiver circuit 155. It comprises a filter 81, and ADC 153 and an image processor 154. The ADC 153 recovers the digital image data sent by image processor 152. Image processor 154 may perform an MPEG or JPEG decoding and may repeat images at an appropriate rate in order to be displayed the images on monitor 18.

Image processor 152 may output its image data to modulators 57 or 58. In this case filter 81 in figure 6 must be replaced by demodulator 95 or 137, respectively. If image processor 152 is connected to modulator 58 low pass filter 41 may be removed in order to perform popular phase shift keying (PSK) modulation techniques. These techniques comprise in particular binary PSK and quaternary PSK and the respective differential forms thereof.

Receiver 17 may comprise one or more modulators 57 and 58 and each camera module may comprise one of the receiver circuits 95 or 137 for transmitting commands from receiver 17 to the camera modules 4 and 7.

The receiver 17 may be supplied with electrical energy from either primary power cable 11 or secondary power cable 12. In a further embodiment, a third power source may provide electrical power to the receiver. In the latter embodiment receiver 17 only receives images information from power cables 11 and 12 or transmits command over same.

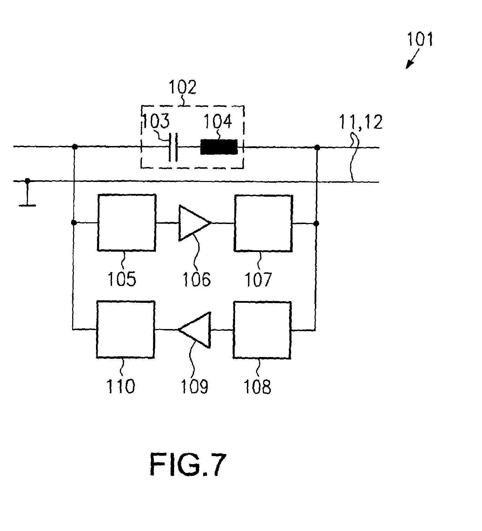

Figure 7 shows a repeater module 101 which may be inserted into both power cables 11 and 12 at preferably equally spaced positions The distance between two repeaters may be two kilometers. Each repeater comprises a resonance circuit 102 for transmitting power frequency of the electricity network of typically 50 or 60 Hz and blocking the frequency band comprising image information. Moreover the repeater comprises filter 105, 107, 108 and 110 for blocking the power frequency and transmitting the information frequency band. The latter filters are similar to filters 46 and 81. Moreover amplifier 106 and 109 are provided for amplifying the image information and commands on power cables 11 and 12.

Further modifications and variations of the present invention will be apparent to those skilled in the art in view of this description. Accordingly, this description is to be construed as illustrative only and is for the purpose of teaching those skilled in the art the general manner of carrying out the present invention. It is to be understood that the forms of the invention shown and described herein are to be taken as the presently preferred embodiments.

## Claims

1. A transmitter comprising:
an input (53) for receiving an image signal;
an encoder (32, 57, 58) for generating an output signal from said image signal; said encoder comprising:
an analog-to-digital converter (151) connected to said input (53) for digitizing said image signal in order to generate a digital signal;
an image processor (152) connected to said analog-to-digital converter (151) for receiving said digital signal for processing said digital signal in order to generate a processed signal; and
a band pass filter (46) being connected to said image processor (152) and said output (54) for blocking a power frequency and for letting a frequency band pass which comprises the frequency range of said processed signal; and
an output (54) connectable to a power cable (11, 12) for transmitting said output signal via said power cable (11,12).

2. The transmitter of claims 1, said image processor (152) comparing successive images and said image processor only outputs a processed signal, if successive images differ from each other.

3. The transmitter of one of claims 1 or 2, the processed signal comprising an ID number of said image signal, said ID number corresponding to an ID number of an image source (4, 7) providing said image signal.

4. A receiver comprising:
an input (94) connectable to a power cable (11,12) for receiving an output signal comprising image information;
a decoder (95, 137, 155) for generating an image signal based on said output signal said decoder being connected to said input (94); and
an output (93) connected to said decoder (95, 137, 155) for outputting said image signal.

5. The receiver of claim 4, said output signal comprising image information which stems from a plurality of image sources (4, 7); and
said decoder selecting the information comprised in the output signal stemming from a subset of said plurality of image sources (4, 7) and generating said video signal based on the information stemming from said subset of image sources (4, 7) comprising more than one image source.

6. The receiver of claim 4, said output signal comprising image information which stems from a plurality of image sources (4, 7) an ID number being assigned to each image source (4, 7);
said ID number being transmitted with each image information portion stemming from the respective image source;
said receiver comprising a plurality of outputs, each output being connected to said decoder and being associated with an ID number;
said decoder generating an image signal for each output based on the image information portions the ID number of which matches the ID number associated to said output.

7. A method comprising:
encoding an image signal to generate an encoded signal;
transmitting said encoded signal via a power cable (11, 12); and
decoding said encoded signal received over said power cable (11, 12) to recover said image signal.

8. A surveillance system (1) comprising:
a secondary power cable (12) for providing electrical power to consumer loads (4, 7, 13, 14, 16, 17, 18, 31 );
an image source (31);
a transmitter (32, 57, 58) connected to said secondary power cable (12) and said image source (31); said transmitter (32, 57, 58) encoding image information and transmitting the encoded information and transmitting the encoded image information over said secondary power cable (12);
a receiver (17) connected to said secondary power cable (12) for decoding the encoded image information to recover said image information provided on said secondary power cable (12); and
a display (18) connected to said receiver for displaying said image information.

9. The surveillance system of claim 8, further comprising a pnmary power cable (11) which actually provides said consumer loads (4, 7, 13, 14, 16, 17, 18, 31 ) with electrical power whereas the secondary power cable does not transport electrical power apart from stray losses and the power necessary to transport said encoded image information.

10. The surveillance system of one of claims 8 or 9, further comprising repeaters (101) connected to said primary and secondary power cables (11,12) at equally spaced positions for amplifying said encoded image information signal on said primary and secondary power cables (11, 12).
